# EUROPEAN PATENT APPLICATION

(11) **EP 4 579 175 A1**
(43) Date of publication of application: **02.07.2025**
(21) Application number: 24223359.1
(22) Date of filing: 27.12.2024
(51) Int. Cl.: G01B 11/25, G01B 11/30

(54) **METHOD FOR EVALUATING FLATNESS OF CLOTH MATERIAL**

(30) Priority: 28.12.2023 JP 2023223475
(71) Applicant: AGC INC., Chiyoda-ku, Tokyo 1008405 (JP)
(72) Inventor: OTA, Shinya, Tokyo, 100-8405 (JP); ASANO, Kenya, Tokyo, 100-8405 (JP)
(74) Representative: TBK

(57) **Abstract**

The present invention relates to a method for evaluating flatness of a cloth material, which is a method for evaluating a degree of irregularities on a surface of a cloth material, the method including: placing a resin sheet on the surface of the cloth material; closely attaching the resin sheet to the cloth material by applying a vacuum to obtain a stacked body; and evaluating the degree of the irregularities on the surface of the cloth material by performing one of a method (1) in which a surface of the resin sheet is projected onto a screen by a projector, an obtained reflected image is photographed by a camera to obtain a monitor image, and the monitor image is subjected to image processing, and a method (2) in which a stereoscopic optical image of the cloth material in the stacked body is obtained using a one-shot 3D measuring device.

## Description

### TECHNICAL FIELD

The present invention relates to a method for evaluating flatness of a cloth material, and more particularly to a method for evaluating a degree of irregularities on a surface of a mold cloth for use in bending and forming a glass plate.

### BACKGROUND ART

In recent years, a window glass for automobiles or a window glass for buildings has a curvature in order to improve an aesthetic appearance and daylighting efficiency. A glass having a curved shape (curved glass) is produced, for example, by heating a glass plate in a heating furnace to a temperature equal to or higher than a transition point, and pressing the glass plate in a mold having a predetermined shape.

In a bending and forming device used for press bending and forming a glass plate, the surface of a mold is covered with a protective material called a mold cloth in order to prevent the glass plate from remaining stuck to by the mold. The mold cloth used is generally a knitted fabric obtained by knitting yarns (spun threads) made of a fire-resistant fiber, and therefore has fine irregularities on the surface. When the glass plate is pressed on the mold cloth, the irregularities on the surface of the mold cloth may be transferred to the surface of the glass plate. Accordingly, fine irregularities are generated on the surface of the glass plate, and depending on the viewing angle, a phenomenon called undulation (perspective distortion) may occur, where the surface of the glass plate appears wavy or an object appears distorted.

When the distortion generated in viewing an object through a glass plate is too large, the appearance is impaired and the field of vision is obstructed. Therefore, several methods have been proposed for evaluating whether perspective distortion of a glass plate is within an acceptable range.

For example, a method has been proposed for determining a degree of perspective distortion of a glass plate by generating an image using transmitted light passing through the glass plate and evaluating the image (see, for example, Patent Literatures 1 and 2).
Patent Literature 1: JPH11-142344A
Patent Literature 2: JPH11-211425A

### SUMMARY OF INVENTION

Thus, in the related art, the glass plate is evaluated directly, and there is no established method for evaluating the quality of a mold cloth, which influences the perspective distortion of the glass plate.

Therefore, an object of the present invention is to provide a method for evaluating a degree of irregularities of a mold cloth to evaluate the influence of the mold cloth on the quality of a glass plate.

The inventors of the present invention have found that when a resin sheet is placed on a surface of a cloth material to obtain a stacked body and a reflected image of a surface of the resin sheet is checked or a stereoscopic optical image of the cloth material in the stacked body is checked using an optical microscope to evaluate a degree of irregularities on the surface of the cloth material, a degree of perspective distortion of a glass plate prepared using the cloth material can be predicted and evaluated. Thus, the present invention has been completed.

The present invention relates to a method for evaluating flatness of a cloth material, which is a method for evaluating a degree of irregularities on a surface of a cloth material, the method including: placing a resin sheet on the surface of the cloth material; closely attaching the resin sheet to the cloth material by applying a vacuum to obtain a stacked body; and evaluating the degree of the irregularities on the surface of the cloth material by performing one of the following methods (1) and (2).
(1) A reflected image evaluation method in which a surface of the resin sheet is projected onto a screen by a projector, an obtained reflected image is photographed by a camera to obtain a monitor image, and the monitor image is subjected to image processing
(2) A stereoscopic optical image evaluation method in which a stereoscopic optical image of the cloth material in the stacked body is obtained using a one-shot 3D measuring device.

With the method for evaluating flatness of a cloth material according to the present invention, since the degree of the irregularities on the surface of the cloth material can be evaluated, the degree of perspective distortion of a glass plate when the evaluated cloth material is used to form the glass plate can be predicted and evaluated. In addition, since a flattened cloth material can be selected, the perspective distortion of the glass plate subjected to bending and forming can be reduced, and forming of a glass plate that does not meet the specification can be avoided.

### BRIEF DESCRIPTION OF DRAWINGS

FIG. 1 is an external view of a vacuum mold used to closely attach a resin sheet to a cloth material.
FIG. 2 is a diagram showing test results in Example 1 and Example 2.
FIG. 3 is a diagram showing test results in Example 3 and Example 4.
FIG. 4 is a diagram showing test results in Example 5 and Example 6.
FIG. 5 is a diagram showing test results in Example 7 and Example 8.

### DESCRIPTION OF EMBODIMENTS

Hereinafter, the present invention will be described, and the present invention is not limited by examples in the following description. Note that, in the present description, an expression "to" used to express a numerical range includes numerical values before and after it as a lower limit value and an upper limit value of the range, respectively.

A method for evaluating flatness of a cloth material according to the present invention is a method for evaluating a degree of irregularities on a surface of a cloth material, and includes: placing a resin sheet on the surface of the cloth material; closely attaching the resin sheet to the cloth material by applying a vacuum to obtain a stacked body; and evaluating the degree of the irregularities on the surface of the cloth material by performing one of the following methods (1) and (2).
(1) A reflected image evaluation method in which a surface of the resin sheet is projected onto a screen by a projector, an obtained reflected image is photographed by a camera to obtain a monitor image, and the monitor image is subjected to image processing
(2) A stereoscopic optical image evaluation method in which a stereoscopic optical image of the cloth material in the stacked body is obtained using a one-shot 3D measuring device

Examples of an application of the cloth material include a protective material (mold cloth) for use in bending and forming a glass plate, and a protective material (setter cloth) for use in heating a glass plate on a ceramic plate or the like. The method for evaluating flatness of a cloth material according to the present invention is suitable for evaluating the mold cloth since surface properties of an object that comes into contact with the cloth material can be predicted and evaluated.

The mold cloth is a knitted fabric obtained by knitting yarns (spun threads) made of a fire-resistant fiber. Examples of the fiber for forming the mold cloth include a fiber made of a metal, a ceramic (glass fiber), and a heat-resistant resin (such as polyparaphenylene terephthalamide and polybenzoxazole (PBO)) or the like. The mold cloth is prepared by using one or a combination of two or more of these materials.

The mold cloth has fine irregularities on the surface, and when the glass plate is pressed on the mold cloth, the irregularities on the surface of the mold cloth may be transferred to the surface of the glass plate. When the degree of the irregularities on the surface of the mold cloth is evaluated by the evaluation method according to the present invention, a degree of perspective distortion on the surface of the glass plate can be predicted and evaluated, making it possible to select a more preferred mold cloth.

In the method for evaluating flatness of a cloth material according to the present invention, first, a resin sheet is placed on the surface of the cloth material, and the resin sheet is closely attached to the cloth material by applying a vacuum to obtain a stacked body.

For example, when a stacked body is obtained by applying a vacuum to a glass plate or a metal plate, irregularities on the surface of the cloth material are compressed, making it impossible to perform proper evaluation. However, when a resin sheet is used, the resin sheet is closely attached to cloth material by applying a vacuum, and irregularities are formed on the surface of the resin sheet in accordance with the irregularities on the surface of the cloth material.

Examples of a material for the resin sheet include polyvinyl chloride (PVC), acrylic, polyethylene terephthalate (PET), and a polycarbonate. The resin sheet is preferably made of at least one resin selected from the group consisting of these materials.

Among them, polyvinyl chloride (PVC) and polyethylene terephthalate (PET) are preferred, and polyvinyl chloride (PVC) is more preferred since it is low in cost, soft, and can be easily conformed to the irregularities on the surface of the cloth material.

The resin sheet to be used preferably has a thickness in the range of 0.5 mm to 6 mm. When the thickness is 0.5 mm or more, the resin sheet is excellent in handleability and does not tear when a vacuum is applied. When the thickness is 6 mm or less, the irregularities on the surface of the cloth material can be reproduced well.

The thickness of the resin sheet is more preferably 2 mm or more, still more preferably 2.5 mm or more, particularly preferably 3 mm or more, and is more preferably 5 mm or less, still more preferably 4 mm or less, particularly preferably 3.5 mm or less.

Applying a vacuum for closely attaching the resin sheet to the cloth material can be performed by a known method.

For example, a vacuum generator may be used for applying a vacuum. As the vacuum generator, any known vacuum generator such as a vacuum cleaner, a vacuum pump, or a suction machine may be used.

In the present embodiment, for example, it is preferable to prepare a vacuum mold as shown below and use it to obtain a stacked body.

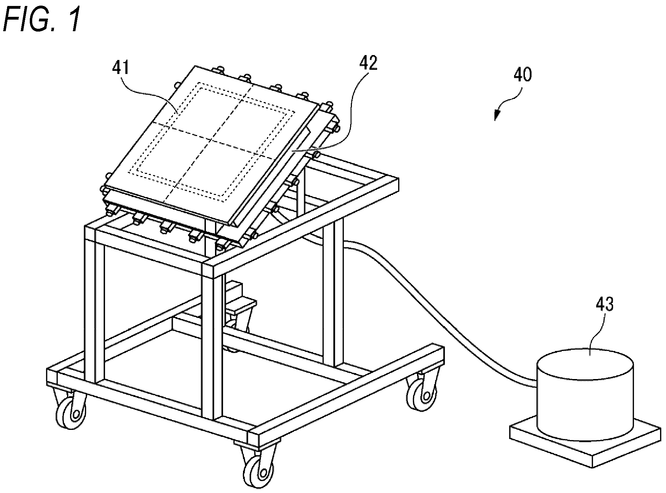

As shown in FIG. 1, an iron plate 42 having a size of 50 cm in length, 50 cm in width, and 1 cm in thickness and having a plurality of air suction holes around an outer peripheral portion and a central portion (20 cm × 20 cm) of the surface is stacked on a sample glass 41 formed to have a 4000R spherical surface with a size of 50 cm × 50 cm, following by setting on a vacuum generator 43 at an inclination angle of 25°, to prepare a small vacuum mold 40.

A cloth material is adhered to the iron plate 42, is then covered with a resin sheet, followed by sucking with the vacuum generator 43 to obtain a stacked body having a curved surface.

When the stacked body is to be used in a method (1) to be described later, the stacked body having a curved surface prepared above is used, and when it is to be used in a method (2) to be described later, a stacked body having a flat shape is prepared by closely attaching the resin sheet to the cloth material without using the sample glass 41.

When applying a vacuum, there is no particular limitation as long as the resin sheet is closely attached to the surface of the cloth material. It is preferable to applying a vacuum at a vacuum pressure of -50 kPa to -5 kPa. When the vacuum pressure is -5 kPa or less, the resin sheet can be made to conform to the irregularities on the surface of the cloth material. The vacuum pressure is more preferably -10 kPa or less, still more preferably -15 kPa or less, particularly preferably -25 kPa or less, and is more preferably -45 kPa or more, still more preferably -40 kPa or more, particularly preferably -35 kPa or more.

The stacked body obtained by applying a vacuum is evaluated by one of the following methods (1) and (2).
(1) A reflected image evaluation method in which a surface of the resin sheet is projected onto a screen by a projector, an obtained reflected image is photographed by a camera to obtain a monitor image, and the monitor image is subjected to image processing
(2) A stereoscopic optical image evaluation method in which a stereoscopic optical image of the cloth material in the stacked body is obtained using a one-shot 3D measuring device

### <(1) Reflected Image Evaluation Method>

The above method (1) includes, for example, a method using a 3D measurement system called "SCREENSCAN-Reflected Distortion" manufactured by ISRA VISION GmbH, which is capable of measuring a curvature of a reflective surface of the cloth material in a non-contact manner. In the above method (1), a maximum height difference Rz of the surface of the cloth material can be measured.

The maximum height difference Rz is measured as follows.

First, a reflected image of the surface of the resin sheet of the stacked body obtained above is obtained using "SCREENSCAN-Reflected Distortion" manufactured by ISRA VISION GmbH. The obtained reflected image is photographed with a camera to obtain a 1/R distribution image representing strength of the distortion. The distribution image is decomposed into 256 color difference gradations, and a difference in shade level is checked from a shade distribution in a region A of 400 cm² (20 cm × 20 cm) in a central portion of the image, and the maximum value of the difference in shade level (maximum shade difference) is determined as the maximum height difference Rz of the irregularities on the surface of the cloth material. Hereinafter, this method for evaluating the irregularities on the surface of the cloth material will be referred to as a "screen scan evaluation method".

More specifically, in the screen scan evaluation method, the stacked body is set in a measurement MOLD "SCREENSCAN-Reflected Distortion" manufactured by ISRA VISION GmbH, a zebra image is projected onto the screen using a projector, and the reflected image is photographed using a camera located above. When the projected reflected image deviates from the original position, it represents "distortion". In this system, the reciprocal of a deviation distance, 1/R, is measured and a distribution image is generated, allowing the strength of the distortion to be recognized. Then, the obtained distribution image is decomposed into 256 color difference gradations, the difference in shade level is checked from the shade distribution in the region A of 400 cm² (20 cm × 20 cm) in the central portion of the image, and the maximum value of the difference in shade level (maximum shade difference) is determined.

Since the resin sheet conforms to the surface shape of the cloth material, the maximum height difference Rz measured by the screen scan evaluation method is approximately equal to the maximum height difference Rz of the surface of the cloth material.

The maximum height difference Rz of the surface of the cloth material measured by the screen scan evaluation method is preferably 0.30 (1/m) or less, and when the maximum height difference Rz is 0.30 (1/m) or less, the surface of the cloth material can be evaluated as being flat. The maximum height difference Rz of the surface of the cloth material is more preferably 0.26 (1/m) or less, and still more preferably 0.24 (1/m) or less. The smaller the maximum height difference Rz, the smaller the roughness of the surface of the cloth material. Therefore, there is no particular limitation on the lower limit value.

### <(2) Stereoscopic Optical Image Evaluation Method>

In the above method (2), as a one-shot 3D measuring device which is an optical microscope, for example, a commercially available one-shot 3D measuring device "VR6000" manufactured by KEYENCE Corporation can be used to measure the average roughness Ra of the surface of the cloth material in a set region. With the one-shot 3D measuring device, when a striped light pattern is emitted onto the surface of a sample, the thickness and the shape of the stripes change depending on the shape of the material, so that this change is detected to measure the average roughness Ra of the surface of the cloth material. Hereinafter, the method of evaluating the irregularities on the surface of the cloth material using "VR6000" manufactured by KEYENCE Corporation will be referred to as a "pattern light projection evaluation method".

The average roughness Ra of the surface of the cloth material is preferably 80 µm or less, and when the average roughness Ra is 80 µm or less, the surface of the cloth material can be evaluated as being flat. The average roughness Ra of the surface of the cloth material is more preferably 70 µm or less, still more preferably 60 µm or less, and particularly preferably 50 µm or less. The smaller the average roughness Ra, the smaller the roughness of the surface of the cloth material. Therefore, there is no particular limitation on the lower limit value.

In the above method (1) or (2), by measuring the stacked body in which the resin sheet is closely attached to the cloth material, the degree of the irregularities on the surface of the cloth material can be checked, and the degree of flattening can be evaluated. For example, when the cloth material is a mold cloth used in bending and forming a glass plate, the degree of the perspective distortion of the glass plate prepared using the cloth material can be predicted and evaluated, making it possible to select a more preferred mold cloth.

### EXAMPLES

Hereinafter, the present invention will be described with reference to Examples, but the present invention is not limited thereto. In the following description, common components employ the same substance. Unless otherwise specified, "part" and "%" represent "part by mass" and "mass%", respectively. Examples 1 to 8 are Working Examples.

### (Maximum Height Difference Rz of Surface of Mold Cloth)

The maximum height difference Rz of the surface of the mold cloth was measured by using the screen scan evaluation method.

As shown in FIG. 1, the iron plate 42 having a size of 50 cm in length, 50 cm in width, and 1 cm in thickness and having a plurality of air suction holes around the outer peripheral portion and the central portion (20 cm × 20 cm) of the surface was stacked on the sample glass 41 formed to have a 4000R spherical surface with a size of 50 cm × 50 cm, followed by setting on a vacuum cleaner (the vacuum generator 43) at an inclination angle of 25°, to prepare the small vacuum mold 40.

A mold cloth was adhered to the iron plate 42, then covered with a vinyl sheet (polyvinyl chloride (PVC)) having a thickness of 3 mm, followed by sucking with the vacuum cleaner under a pressure of about -35 kPa to obtain a stacked body having a curved surface.

The stacked body was set in a measurement MOLD "SCREENSCAN-Reflected Distortion" manufactured by ISRA VISION GmbH, a zebra image was projected onto the screen using a projector, and the reflected image was photographed using a camera located above, to obtain a 1/R distribution image representing the strength of the distortion. The obtained distribution image was decomposed into 256 color difference gradations, the difference in shade level was checked from the shade distribution in the region A of 400 cm² (20 cm × 20 cm) in the central portion of the image, and the maximum value of the difference in shade level (maximum shade difference) was determined.

### (Average Roughness Ra of Surface of Mold Cloth)

The average roughness Ra of the surface of the mold cloth was measured by using the pattern light projection evaluation method.

The small vacuum mold 40 having the configuration shown in FIG. 1 was used, but no sample glass 41 was used. A stacked body having a flat shape in which the vinyl sheet was closely attached to the mold cloth was prepared, and the average roughness Ra of the surface of the mold cloth material was measured using a one-shot 3D measuring device "VR6000" manufactured by KEYENCE Corporation.

### (Maximum Perspective Distortion Value MAX of Glass Molded Article)

An image was taken under conditions of an attachment angle of 30 degrees with Filter 4.5.0 using "LABSCAN" manufactured by ISRA VISION GmbH, and the maximum perspective distortion value in the central portion of the image was measured.

### <Test Example 1: Examples 1 to 4>

### (Example 1)

A commercially available mold cloth A was used. The mold cloth A had a maximum height difference Rz of 0.502 (1/m) on the surface.

A press device including a female mold (lower mold) and a male mold (upper mold) for press-forming a glass plate was used to prepare a glass molded article. The mold cloth A was attached to a lower surface of the male mold, and a glass plate (soda lime glass) was heated to 640°C to 660°C and bent to obtain a spherical glass having a curvature radius of 4000 mm.

### (Example 2)

The mold cloth A in Example 1 was set on a roller press machine, a pressure-resistant auxiliary plate (SUS304, thickness: 4 mm) was placed on the mold cloth, and a pressure of 0.6 MPa was applied from above the pressure-resistant auxiliary plate, with the roller moving back and forth three times to press the mold cloth, thereby obtaining a flattened mold cloth A. The flattened mold cloth A had a maximum height difference Rz of 0.325 (1/m) on the surface.

Using the obtained flattened mold cloth A, a glass molded article was prepared in the same manner as in Example 1.

### (Example 3)

A commercially available mold cloth B was used. The mold cloth B had a maximum height difference Rz of 0.439 (1/m) on the surface.

Using the mold cloth B, a glass molded article was prepared in the same manner as in Example 1.

### (Example 4)

The mold cloth B in Example 3 was subjected to a press treatment in the same manner as in Example 2 to obtain a flattened mold cloth B. The flattened mold cloth B had a maximum height difference Rz of 0.298 (1/m) on the surface.

Using the obtained flattened mold cloth B, a glass molded article was prepared in the same manner as in Example 1.

The glass molded articles in Example 1 to Example 4 were each laminated to form a laminated glass, and the maximum perspective distortion value MAX was measured.

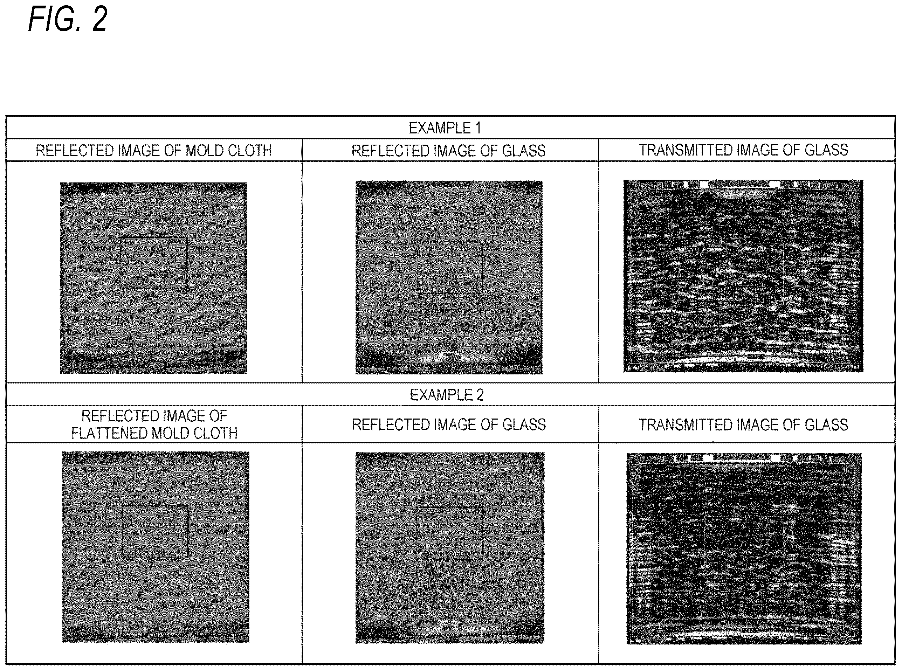

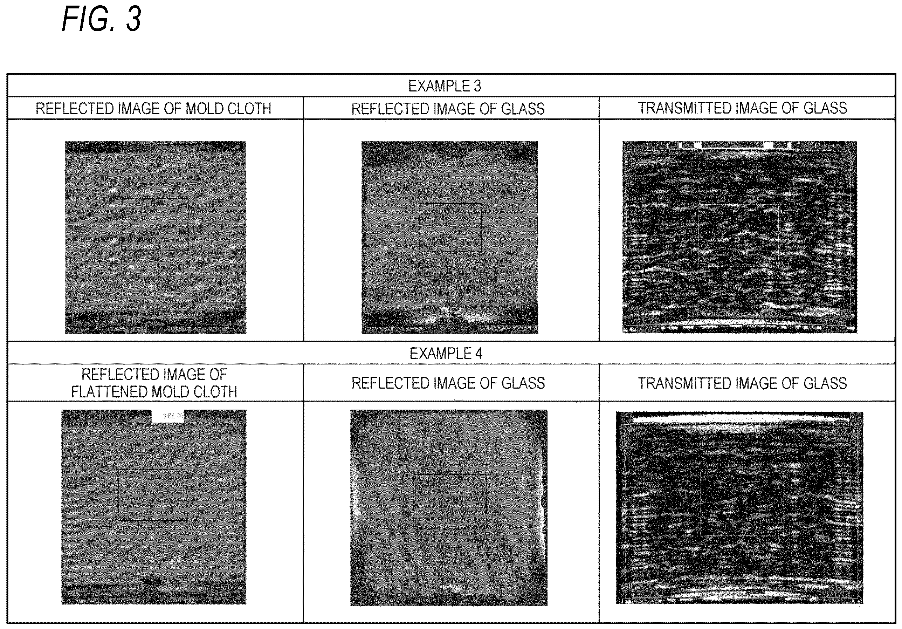

Results are shown in Table 1 and FIGS. 2 and 3.

**[Table 1]**

| | | Unit | Example 1 | Example 2 | Example 3 | Example 4 |
|---|---|---|---|---|---|---|
| Mold cloth | Type of cloth | - | Cloth A | Cloth A | Cloth B | Cloth B |
| | Presence or absence of flattening (roller press: 0.6 MPa) | - | Absence | Presence | Absence | Presence |
| | Maximum height difference Rz using screen scan evaluation method | 11m | 0.502 | 0.325 | 0.439 | 0.298 |
| Glass molded article | Maximum perspective distortion value MAX | mdpt | 167 | 103 | 149 | 118 |

In Example 2, the flattened mold cloth A obtained by pressing the mold cloth A used in Example 1 was evaluated. When comparing Example 1 and Example 2, Example 2 had a smaller maximum height difference Rz. Similarly, when comparing Example 3 and Example 4, Example 4 in which the flattened mold cloth B obtained by pressing the mold cloth B was evaluated had a smaller maximum height difference Rz.

As seen from these results, with the screen scan evaluation method, the degree of the irregularities on the surface of the cloth material can be evaluated.

### <Test Example 2: Examples 5 to 8>

### (Example 5)

A commercially available mold cloth A was used. The mold cloth A had a maximum height difference Rz of 0.502 (1/m) on the surface. In addition, the mold cloth A had an average roughness Ra of 92.3 (µm) on the surface.

A press device including a female mold (lower mold) and a male mold (upper mold) for press-forming a glass plate was used to prepare a glass molded article. The mold cloth A was attached to a lower surface of the male mold, and a glass plate (soda lime glass) was heated to 640°C to 660°C and bent to obtain a spherical glass having a curvature radius of 4000 mm.

Note that, Example 5 is the same as Example 1.

### (Example 6)

The mold cloth A in Example 1 was set on a cylinder press machine, a pressure-resistant auxiliary plate (SUS304, thickness: 4 mm) was placed on the mold cloth, and a pressure of 2.5 MPa was applied from above the pressure-resistant auxiliary plate to press the mold cloth, thereby obtaining a flattened mold cloth. The flattened mold cloth had a maximum height difference Rz of 0.286 (1/m) and an average roughness Ra of 72.6 (µm) on the surface.

Using the obtained flattened mold cloth, a glass molded article was prepared in the same manner as in Example 5.

### (Example 7)

The same procedure as in Example 6 was performed except that pressing was performed at a pressure of 4.75 MPa.

The flattened mold cloth prepared in Example 7 had a maximum height difference Rz of 0.243 (1/m) and an average roughness Ra of 69.0 (µm) on the surface.

Using the obtained flattened mold cloth, a glass molded article was prepared in the same manner as in Example 5.

### (Example 8)

The same procedure as in Example 6 was performed except that pressing was performed at a pressure of 7 MPa.

The flattened mold cloth prepared in Example 8 had a maximum height difference Rz of 0.231 (1/m) and an average roughness Ra of 58.8 (µm) on the surface.

Using the obtained flattened mold cloth, a glass molded article was prepared in the same manner as in Example 5.

The glass molded articles in Example 5 to Example 8 were each laminated to form a laminated glass, and the maximum perspective distortion value MAX was measured.

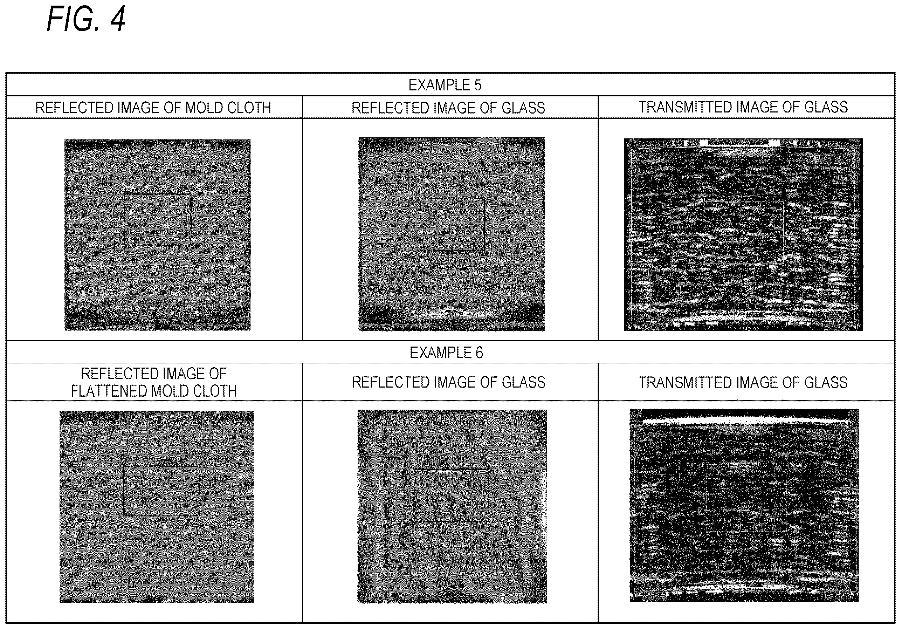

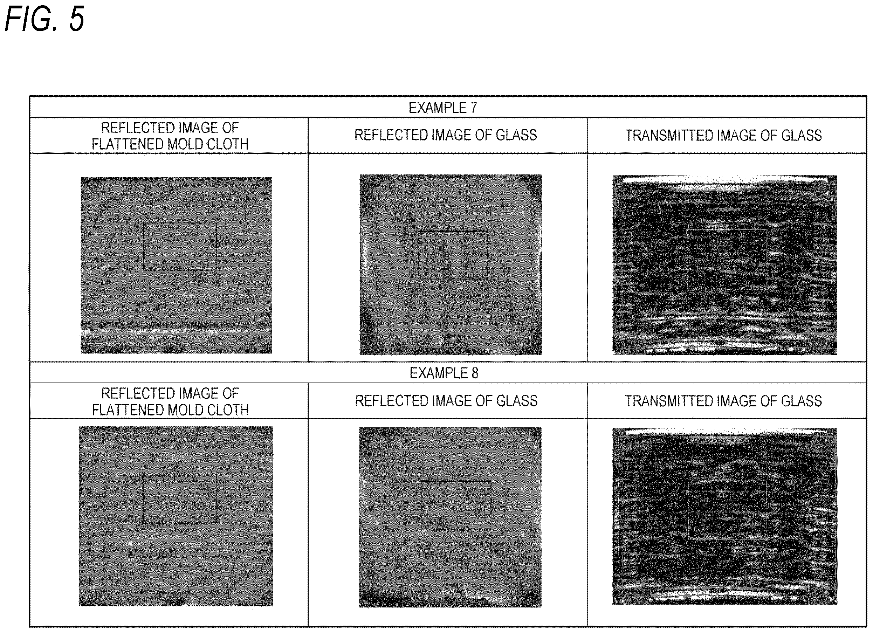

Results are shown in Table 2 and FIGS. 4 and 5.

**[Table 2]**

| | | Unit | Example 5 | Example 6 | Example 7 | Example 8 |
|---|---|---|---|---|---|---|
| Mold cloth | Type of cloth | - | Cloth A | Cloth A | Cloth A | Cloth A |
| | Presence or absence of flattening (cylinder press) | - | Absence | Presence | Presence | Presence |
| | Cylinder press pressure | MPa | - | 2.5 | 4.75 | 7.0 |
| | Maximum height difference Rz using screen scan evaluation method | 1/m | 0.502 | 0.286 | 0.243 | 0.231 |
| | Average roughness Ra using pattern light projection evaluation method | µm | 92.3 | 72.6 | 69.0 | 58.8 |
| Glass molded article | Maximum perspective distortion value MAX | mdpt | 167 | 90 | 82 | 91 |

When comparing Example 5 and Examples 6 to 8, Examples 6 to 8 in which the mold cloth was flattened had a smaller maximum height difference Rz than Example 5, and the average roughness Ra of the surface was also smaller, showing a similar tendency. As seen from this result, with either one of the screen scan evaluation method or the pattern light projection evaluation method, the degree of the irregularities on the surface of the cloth material can be evaluated.

As described above, the following matters are disclosed in the present description.
<1> A method for evaluating flatness of a cloth material, which is a method for evaluating a degree of irregularities on a surface of a cloth material, the method including:
   placing a resin sheet on the surface of the cloth material;
   closely attaching the resin sheet to the cloth material by applying a vacuum to obtain a stacked body; and
   evaluating the degree of the irregularities on the surface of the cloth material by performing one of the following methods (1) and (2),
      (1) a reflected image evaluation method in which a surface of the resin sheet is projected onto a screen by a projector, an obtained reflected image is photographed by a camera to obtain a monitor image, and the monitor image is subjected to image processing, and
      (2) a stereoscopic optical image evaluation method in which a stereoscopic optical image of the cloth material in the stacked body is obtained using a one-shot 3D measuring device.
<2> The method for evaluating flatness of a cloth material according to the above <1>, in which the resin sheet is a sheet made of at least one resin selected from the group consisting of polyvinyl chloride, acrylic, polyethylene terephthalate, and a polycarbonate.
<3> The method for evaluating flatness of a cloth material according to the above <2>, in which the resin sheet is a sheet made of polyvinyl chloride.
<4> The method for evaluating flatness of a cloth material according to any one of the above <1> to <3>, in which the resin sheet has a thickness of 0.5 mm to 6 mm.
<5> The method for evaluating flatness of a cloth material according to any one of the above <1> to <4>, in which the vacuum is applied at a vacuum pressure of -50 kPa to -5 kPa.
<6> The method for evaluating flatness of a cloth material according to any one of the above <1> to <5>, in which a maximum height difference Rz of the surface of the cloth material is measured by the method (1), and an average roughness Ra of the surface of the cloth material is measured by the method (2).

The present application is based on Japanese Patent Application No. 2023-223475 filed on December 28, 2023, and the contents thereof are incorporated herein by reference.

### REFERENCE SIGNS LIST

40 vacuum mold
41 sample glass
42 iron plate
43 vacuum generator

## Claims

1. A method for evaluating flatness of a cloth material, which is a method for evaluating a degree of irregularities on a surface of a cloth material, the method comprising:
placing a resin sheet on the surface of the cloth material;
closely attaching the resin sheet to the cloth material by applying a vacuum to obtain a stacked body; and
evaluating the degree of the irregularities on the surface of the cloth material by performing one of the following methods (1) and (2),
(1) a reflected image evaluation method in which a surface of the resin sheet is projected onto a screen by a projector, an obtained reflected image is photographed by a camera to obtain a monitor image, and the monitor image is subjected to image processing, and
(2) a stereoscopic optical image evaluation method in which a stereoscopic optical image of the cloth material in the stacked body is obtained using a one-shot 3D measuring device.

2. The method for evaluating flatness of a cloth material according to claim 1, wherein the resin sheet is made of at least one resin selected from the group consisting of polyvinyl chloride, acrylic, polyethylene terephthalate, and a polycarbonate.

3. The method for evaluating flatness of a cloth material according to claim 2, wherein the resin sheet is a sheet made of polyvinyl chloride.

4. The method for evaluating flatness of a cloth material according to any one of claims 1 to 3, wherein the resin sheet has a thickness of 0.5 mm to 6 mm.

5. The method for evaluating flatness of a cloth material according to any one of claims 1 to 4, wherein the vacuum is applied at a vacuum pressure of -50 kPa to -5 kPa.

6. The method for evaluating flatness of a cloth material according to any one of claims 1 to 5, wherein a maximum height difference Rz of the surface of the cloth material is measured by the method (1), and an average roughness Ra of the surface of the cloth material is measured by the method (2).
